# EUROPEAN PATENT APPLICATION

(11) **EP 3 957 405 A1**
(43) Date of publication of application: **23.02.2022**
(21) Application number: 20795057.7
(22) Date of filing: 21.04.2020
(51) Int. Cl.: B05B 17/06

(54) **ULTRASONIC ATOMIZATION SHEET AND FABRICATION PROCESS THEREOF**

(30) Priority: 24.04.2019 CN 201910333186
(71) Applicant: Shenzhen Shang Jin Electronic Science and Technology Co. Ltd., Shenzhen, Guangdong 518100 (CN)
(72) Inventor: ZHENG, Yao, Shenzhen, Guangdong 518100 (CN); SU, Qiuhong, Shenzhen, Guangdong 518100 (CN); SU, Songwan, Shenzhen, Guangdong 518100 (CN)
(74) Representative: Lin Chien, Mon-Yin
(86) International application number: PCT/CN2020/085890
(87) International publication number: WO 2020/216212

(57) **Abstract**

An ultrasonic atomization piece and manufacturing process thereof relate to the technical field of ultrasonic atomization. The piece comprises a piezoelectric ceramic sheet (3) and at least one composite plate (1, 5). The composite plate is fixed on one side of the piezoelectric ceramic sheet and includes a substrate and a conductive layer, the conductive layer is in contact with the piezoelectric ceramic sheet, the substrate is provided with atomizing apertures (510), and the substrate is a polymer film. Compared with the traditional stainless steel thin sheet, polymer film is used as the substrate material; the force for piezoelectric ceramic sheet to generate deformation requires being lower, so piezoelectric ceramic sheet can pull polymer film to generate deformation with less energy. The difficulty of drilling apertures is reduced, and metal residues splashing will not occur, thereby eliminating the adverse effect of metal residues on the passage efficiency of liquid.

## Description

### TECHNICAL FIELD

The present disclosure relates to the technical field of ultrasonic atomization, in particular to an ultrasonic atomization piece and manufacturing process thereof.

### RELATED ART

At present, a mesh-type atomizing drive technology in the market has been matured, more industries have begun to introduce in ultrasonic atomization technology, and the introduced ultrasonic atomization technology has solved some disadvantages of the original applications, such as the energy consumption has been greatly decreased, the mist particles have been reduced, and the consistency of the mist particles is well, and so on.

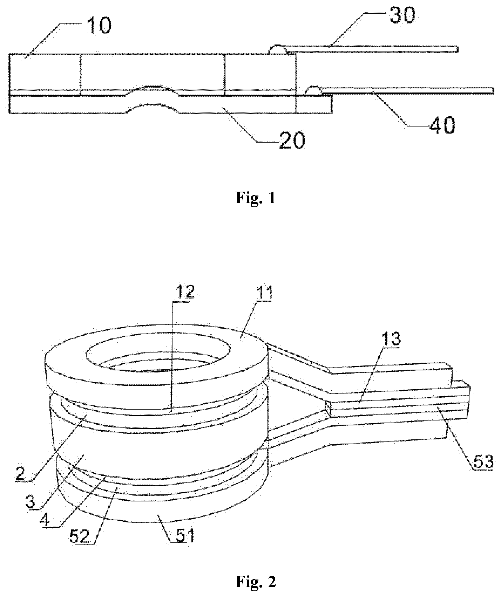

As shown in Fig. 1, a traditional ultrasonic atomization piece is mainly composed of a piezoelectric ceramic sheet 10, a stainless steel metal sheet 20 with a large number of micrometer-sized apertures in the circle center area, a conductive wire 30 welded on one electrode of the piezoelectric ceramic sheet 10 and another conductive wire 40 welded on the stainless steel sheet 20. The piezoelectric ceramic sheet 10 is connected to the stainless steel metal sheet 20 through an adhesive.

The working principles of the traditional ultrasonic atomization piece are as follows.

When a voltage is applied between two electrodes of the piezoelectric ceramic sheet, an expanded deformation will occur; when a driving voltage is an alternate current signal, the piezoelectric ceramic will generate repeated deformations that are consistent with the frequency of the alternate current signal. A thin layer of metal material is bonded on a surface of the piezoelectric ceramic sheet, when the voltages are applied to the electrodes of the piezoelectric ceramic sheet, the deformation generated by the piezoelectric ceramic sheet will be transmitted to the metal layer through the bonding material. At this time, a stress point is generated at the circular portion of the metal material layer; if an arc plane is formed at the circle center portion of the metal material through stamping or other methods, when the deformation of the piezoelectric ceramic is transmitted to the metal layer and a tensile stress is generated at the circle center position, the arc plane will generate motions that are perpendicular to the metal layer.

In this case, if a bottom surface of the metal layer is in contact with liquid, the metal layer will continuously hit the liquid. Since a compression rate of the liquid is not high, when the liquid is hit by the center portion of the metal circle, a high pressure is generated on a liquid surface. If the arc plane of the metal circle is provided with apertures, when the metal hits the liquid surface, the liquid is locally compressed to generate a certain pressure, and the pressure of the liquid is released through the apertures, so that a part of the liquids will be splashed out from the apertures to achieve the atomizing purpose.

However, the traditional ultrasonic atomization piece generally has the following disadvantages.
1. Since the deformation energy is transmitted to the stainless steel metal sheet, and the hardness of the stainless steel metal material is relatively high, therefore the force for the piezoelectric ceramic to generate deformation requires being higher, and the piezoelectric ceramic is required to generate larger energy for pulling the stainless steel metal sheet to deform.
2. Since the adhesive is dispensed through manual operation, it is impossible to predict a shape of the adhesive after the piezoelectric ceramic is bonded with the stainless steel metal sheet, so it is inconvenient to use a schematic view to mark its position and shape. Besides, the conductive wire of the other electrode is welded on the stainless steel metal sheet, so the conductivity of the adhesive is required, and the adhesive must have a well electrical conductivity. Moreover, since a carrier of the deformation energy is a chemical adhesive, but the conductivity of the adhesive cannot be compared with that of the metal materials, so there is a certain resistance, which leads to the loss of current transmission.
3. Since the micrometer-sized mesh needs to be processed on the stainless steel metal sheet, the power requirement of the drilling equipment is relatively high. The drilling equipment needs enough energy to form cone-shaped apertures on the surface of the metal sheet, since the heat conduction speed of the metal is quite fast, a lot of splashing metal residues will be generated during the drilling process due to an uneven heat transmission, and some metal residues will be attached to an inner wall of the apertures in a semi-molten state, so the inner wall and edge of the mesh are very rough, which affects the passage efficiency of the liquid. During the working of the atomization piece, the repeated deformations of the metal sheet will easily form the stress concentration points on the rough surface, resulting in metal fractures. A large amount of the metal residues are generated during the drilling process, so the metal sheet must be cleaned for a long time after drilling, thus a large amount of waste water containing heavy metal particles will be generated.
4. A high temperature generated during the conductive wire welding process can easily lead to failures of partial areas of the piezoelectric ceramic sheet. A failure temperature of the conventional piezoelectric ceramic is only 250°C, but a local temperature of the conductive wire welding process can reach 380°C, resulting in that partial areas of the piezoelectric ceramic sheet fails due to the high temperature, thus an overall consistency of the product is poor.
5. Since the stainless steel sheet is not an ideal welding material, the solderability between the surface and the solder is relatively poor, so an acid chemical needs to be used to corrode a protruding portion of the stainless steel sheet before the conductive wire is welded on the stainless steel sheet, thus to roughen the local surface to improve the solderability. However, actually, in the welding process, the welding strength is still not high due to the poor solderability of the material itself, thus to form poor contact easily, which affects the conduction efficiency and is also easy to fall off. Besides, the acidic chemical is relatively dangerous during use, the produced pollutants are difficult to handle, and the process does not meet the environmental protection requirements.
6. In the actual production process of the product, the process flow is excessively long, the production complexity is relatively high, and some processes are difficult to achieve automatic manufacturing.

In summary, the prior art is deficient in the lack of a new ultrasonic atomization piece and manufacturing process thereof to overcome the above-mentioned disadvantages of the traditional atomization piece.

### SUMMARY

One of the technical problems solved by the present disclosure is to provide an ultrasonic atomization piece that has the advantages of low requirements on the deformation force of the piezoelectric ceramic sheet, low difficulty in processing the atomizing apertures, and stable product quality.

In order to solve the above-mentioned technical problems, the embodiment of the present disclosure provides an ultrasonic atomization piece, comprising a piezoelectric ceramic sheet and at least one composite plate, wherein the composite plate is fixed on one side of the piezoelectric ceramic sheet and includes a substrate and a conductive layer. The conductive layer is in contact with the piezoelectric ceramic sheet, the substrate is provided with atomizing apertures, and the substrate is a polymer film.

In the above technical solution, furthermore, the substrate is a PolyimideFilm, and the conductive layer is a copper foil.

In the above technical solution, furthermore, the substrate is a PolyimideFilm, and the conductive layer is a stainless steel sheet.

In the above technical solution, furthermore, the substrate comprises two composite plates that are respectively a first composite plate and a second composite plate; the substrate of the first composite plate is a first PolyimideFilm, the conductive layer of the first composite plate is a first copper foil, and the first copper foil is fixed on one side of the piezoelectric ceramic sheet. The substrate of the second composite plate is a second PolyimideFilm, the conductive layer of the second composite plate is second copper foil, and the second copper foil is fixed on the other side of the piezoelectric ceramic sheet. The second PolyimideFilm is provided with atomizing apertures, a part of the first copper foil is served as a first electrode of the piezoelectric ceramic sheet, and a part of the second copper foil is served as a second electrode of the piezoelectric ceramic sheet.

In the above technical solution, furthermore, the first composite plate further includes a third PolyimideFilm which is fixed on the first electrode, the second composite plate further includes a fourth PolyimideFilm which is fixed on the second electrode, and the third PolyimideFilm is fixedly connected to the fourth PolyimideFilm.

In the above technical solution, furthermore, the second composite plate further includes a fifth PolyimideFilm; the fifth PolyimideFilm covers the second copper foil and is faced with a central cavity of the piezoelectric ceramic sheet.

In the above technical solution, furthermore, there is only one composite plate, that is, a third composite plate. The substrate of the third composite plate is a sixth PolyimideFilm, and the conductive layer of the third composite plate is a third copper foil; the third copper foil is fixed on the bottom surface of the piezoelectric ceramic sheet, and the sixth PolyimideFilm is provided with atomizing apertures. A part of the third copper foil is served as a first electrode of the piezoelectric ceramic sheet, and a fourth copper foil serving as a second electrode is provided on the top surface of the piezoelectric ceramic sheet.

In the above technical solution, furthermore, the substrate comprises a circular portion capable of covering a central cavity of the piezoelectric ceramic sheet and a tail portion connected to the circular portion. The conductive layer includes an annular portion and a tail portion connected to the annular portion, the circular portion of the substrate is connected with the annular portion of the conductive layer, and the tail portion of the substrate is connected with the tail portion of the conductive layer.

In the above technical solution, furthermore, an atomizing aperture area is provided on the circular portion of the substrate, and the atomizing aperture area is provided with micron atomizing apertures.

In the above technical solution, furthermore, the atomizing aperture area is an arc-shaped boss protruding towards the piezoelectric ceramic sheet.

In the above technical solution, furthermore, the conductive layer is fixedly connected to the piezoelectric ceramic sheet through a lead-free solder paste layer.

In the above technical solution, furthermore, the conductive layer is fixedly connected to the piezoelectric ceramic sheet through a press-thermosetting conductive adhesive film.

In the above technical solution, furthermore, an inner diameter of the atomizing apertures at a side close to the piezoelectric ceramic sheet is smaller than an inner diameter at a side far away from the piezoelectric ceramic sheet.

In the above technical solution, furthermore, the inner diameter of the atomizing apertures at the side close to the piezoelectric ceramic sheet is 2µm to 8 µm, and the inner diameter of the atomizing apertures at a side far away from the piezoelectric ceramic sheet is 20µm to 60µm.

In addition, the present disclosure further provides a manufacturing process of the above-mentioned ultrasonic atomization piece, comprising:
S1. a second PolyimideFilm of a second composite plate is laser-drilled to form atomizing apertures;
S2. a lead-free solder paste is printed on the top and bottom surfaces of the piezoelectric ceramic sheet through screen printing or dispensing process, thus to form a lead-free solder paste layer;
S3. a first composite plate and the second composite plate are respectively bonded on the top and bottom surfaces of the piezoelectric ceramic sheet;
S4. the first composite plate, the second composite plate, and the piezoelectric ceramic sheet are cured by a solder reflow equipment.

The technical solution of the present disclosure has the following beneficial effects:

The ultrasonic atomization piece provided in the present disclosure is composed of a piezoelectric ceramic sheet and a composite plate, wherein the composite plate includes a substrate and a conductive layer, and the substrate is made of a polymer film. Compared with the traditional stainless steel thin sheet, the deformation force generated by the piezoelectric ceramic sheet requires to be lower, so the piezoelectric ceramic sheet can pull the polymer film to generate deformation with less energy. Meanwhile, the difficulty of drilling apertures is reduced, and metal residue splashing will not occur, thereby eliminating the adverse effect of metal residues on the passage efficiency of liquid, and also solving the problem of metal fractures. In addition, there is no need for long-term cleaning to remove the metal residues, so that the process flow is simplified, and the heavy metal pollution is also avoided. More importantly, when used in the medical field, the polymer film is safer than the stainless steel thin sheet.

### BRIEF DESCRIPTION OF THE DRAWINGS

Fig. 1 is a schematic structural view of an atomization piece in the prior art.
Fig. 2 is a schematic perspective view of the ultrasonic atomization piece provided by Embodiment 1 according to the present disclosure.
Fig. 3 is a cross-sectional view of the ultrasonic atomization piece provided by Embodiment 1 according to the present disclosure.
Fig. 4 is a schematic structural view of atomizing apertures of the ultrasonic atomization piece provided by an embodiment according to the present disclosure.
Fig. 5 is a schematic cross-sectional view of the ultrasonic atomization piece provided by Embodiment 2 according to the present disclosure.
Fig. 6 is a simple process flow chart of the ultrasonic atomization piece provided by an embodiment according to the present disclosure.
Fig. 7 is a more specific process flow chart of the ultrasonic atomization piece provided by an embodiment according to the present disclosure.
Fig. 8 is a process flow chart of a traditional ultrasonic atomization piece.
Fig. 9 is a schematic structural view of the ultrasonic atomization piece prepared by a lead-free solder paste.
Fig. 10 is a schematic structural view of the ultrasonic atomization piece prepared by SMT adhesive.

Reference numbers:
piezoelectric ceramic sheet 10; stainless steel metal sheet 20; conductive wire 30; conductive wire 40;
first composite plate 1; first lead-free solder paste layer 2; piezoelectric ceramic sheet 3; second lead-free solder paste layer 4; second composite plate 5; first PolyimideFilm 11; first copper foil 12;
third PolyimideFilm 13; second PolyimideFilm 51; second copper foil 52; fourth PolyimideFilm 53;
fifth PolyimideFilm 54; atomizing apertures 510; atomizing aperture area 511; arc-shaped boss 512.

### DETAILED DESCRIPTION

Those skilled in the art should understand that, as stated in the related art, the stainless steel sheet is used in the ultrasonic atomization piece in the prior art, which has a high hardness, so the force for the piezoelectric ceramic to generate deformation requires to be higher. The atomizing apertures are processed on the stainless steel metal sheet, the power requirement of the drilling equipment is relatively high. Since the heat conduction speed of the metal is fast, a lot of splashing metal residues will be generated during the drilling process due to an uneven heat transmission, and some metal residues will be attached to an inner wall of the apertures in a semi-molten state, so the inner wall and edge of the mesh are very rough, which affects the passage efficiency of the liquid. During the working of the atomization piece, the repeated deformations of the metal sheet will easily form the stress concentration points on the rough surface, resulting in metal fractures. A large amount of the metal residues are generated during the drilling process, so the metal sheet must be cleaned for a long time after drilling, thus a large amount of waste water containing heavy metal particles will be generated.

Therefore, the present disclosure provides an ultrasonic atomization piece, comprising a piezoelectric ceramic sheet and at least one composite plate, wherein the composite plate is fixed on one side of the piezoelectric ceramic sheet and includes a substrate and a conductive layer. The conductive layer is in contact with the piezoelectric ceramic sheet, the substrate is provided with atomizing apertures, and the substrate is a polymer film.

The present disclosure provides an ultrasonic atomization piece, wherein the substrate is made of a polymer film instead of a traditional stainless steel sheet. Compared with the traditional stainless steel sheet, the deformation force generated by the piezoelectric ceramic requires being lower, and the piezoelectric ceramic sheet can pull the polymer film to generate deformations with less energy. Meanwhile, the difficulty of drilling apertures is reduced, and metal residue splashing will not occur, thereby eliminating the adverse effect of metal residues on the passage efficiency of liquid, and also solving the problem of the metal fractures. In addition, there is no need for long-term cleaning to remove the metal residues, so that the process flow is simplified, and the heavy metal pollution is also avoided. More importantly, the polymer film is safer than the stainless steel sheet when used in medical field.

In addition, the composite plate with a substrate and a conductive layer is directly applied, which can simplify the manufacturing process and facilitate the automatic production.

In order to make the above-mentioned objectives, features and beneficial effects of the disclosure more obvious and understandable, the specific embodiments of the present disclosure will be described in detail with reference to the accompanying drawings hereafter. Apparently, the described embodiments are part of the embodiments of the present disclosure, rather than all of the embodiments. Based on the embodiments in the present disclosure, all other embodiments obtained by those of ordinary skill in the art without creative work shall fall within the protective scope of the present disclosure.

In the description of the present disclosure, it should be noted that the terms "center", "upper", "lower", "left", "right", "vertical", "horizontal", "inner", "outside" , etc. indicating the direction or position relationship are based on the direction or position relationship shown in the drawings, and those terms are just convenient to describe the disclosure and to simplify the description, but not to indicate or imply that the device or the component must have a specific direction, or have been constructed and operated in a specific direction. Therefore, it should not be interpreted as limiting to the present application. In addition, the purpose of the terms "first" and "second" is barely for description, but not to be interpreted as indicating or implying relative importance or implicitly indicating the number of indicated technical features.

In the present disclosure, it should be noted that, unless otherwise expressly provided and defined herein, the terms "arrange", "connect", "connect to", etc. should be interpreted broadly, for example, may be fixedly connected, detachably connected, or integrally connected; may be mechanically connected, or electrically connected; may be directly connected, or may be indirectly connected through an intermediate medium, and may be internally connected between two elements. The specific meanings of the above terms in the present application can be understood according to specific cases by those skilled in the art.

### Embodiment 1

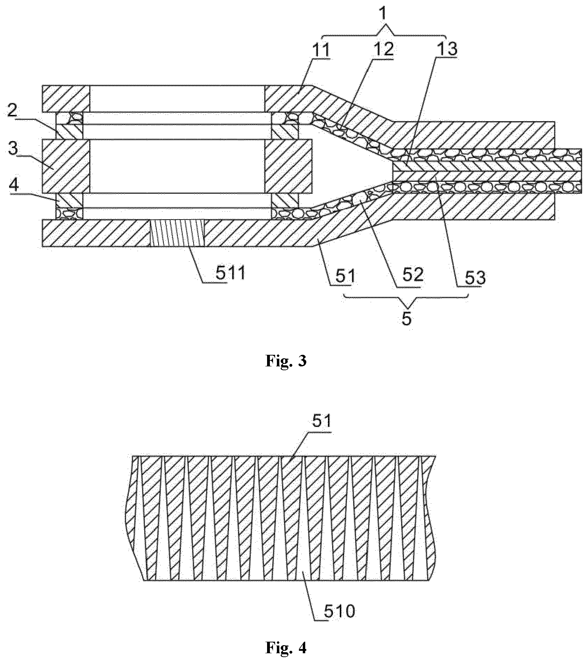

Fig. 2 is a schematic perspective view of the ultrasonic atomization piece provided by Embodiment 1 according to the present disclosure. Fig. 3 is a cross-sectional view of the ultrasonic atomization piece provided by Embodiment 1 according to the present disclosure.

As shown in Fig. 2 and Fig. 3, the ultrasonic atomization piece provided by the present embodiment includes a piezoelectric ceramic sheet 3, a first composite plate 1 and a second composite plate 5. Both the first composite plate 1 and the second composite plate 5 are made of FPC (Flexible Printed Circuit) material. The FPC material is an integral part, which can be purchased directly during the manufacturing process of the product, and then is processed to form atomizing apertures on the basis of it.

The piezoelectric ceramic sheet 3 has an annular shape and can be deformed regularly after being supplied with power.

The first composite plate 1 includes a first PolyimideFilm 11, a first copper foil 12 and a third PolyimideFilm 13.

The PolyimideFilm refers to a polyimide film, and can also be its modified material, such as thermoplastic polyimide (TPI) or other polymer film material with similar performance.

The first PolyimideFilm 11 and the first copper foil 12 have similar shapes, and both include an annular portion and a rectangular portion. The annular portion of the first PolyimideFilm 11 is fixedly connected to the annular portion of the first copper foil 12, and the annular portion of the second PolyimideFilm 51 is fixedly connected to the annular portion of the second copper foil 52.

The annular portion of the first copper foil 12 is fixed on a top surface of the piezoelectric ceramic sheet 3, and the rectangular portion of the first copper foil 12 can be served as a first electrode of the piezoelectric ceramic sheet 3. Specifically, the first copper foil 12 can be fixedly connected to the piezoelectric ceramic sheet 3 through a first lead-free solder paste layer 2.

The third PolyimideFilm 13 is fixed on the rectangular portion of the first copper foil 12, that is, on the first electrode; and the third PolyimideFilm 13 and the first PolyimideFilm 11 are respectively located on the opposite surfaces of the first copper foil 12.

The second composite plate 5 includes a second PolyimideFilm 51, a second copper foil 52 and a fourth PolyimideFilm 53.

The shape of the second copper foil 52 is the same as that of the first copper foil 12, including an annular portion and a rectangular portion. The annular portion of the second copper foil 52 is fixed on a bottom surface of the piezoelectric ceramic sheet 3, and the rectangular portion of the second copper foil 52 can be served as a second electrode of the piezoelectric ceramic sheet 3. Specifically, the second copper foil 52 is fixedly connected to the piezoelectric ceramic sheet 3 through a second lead-free solder paste layer 4.

The first lead-free solder paste layer 2 and the second lead-free solder paste layer 4 have the following effects:
1. the welding effect, wherein it welds the annular piezoelectric ceramic together with the copper foil of the FPC. Generally, a low-temperature lead-free solder is used, whose welding temperature is not higher than 180°C;
2. the conductive effect, wherein it transfers the voltage from the copper foil of the FPC to the metal electrode of the piezoelectric ceramic, as a metal material, the tin has very well electrical conductivity;
3. the deformation energy transmitting effect, wherein it transmits the deformation energy generated by the annular piezoelectric ceramic during the electrification process to the copper foil and the PolyimideFilm, so that the mesh of the PolyimideFilm produces a deformed motion that is perpendicular to the surface of the product.

The second PolyimideFilm 51 includes a circular portion capable of covering a central cavity of the piezoelectric ceramic sheet 3 and a tail portion connected to the circular portion. The circular portion of the second PolyimideFilm 51 is fixedly connected to the annular portion of the second copper foil 52, the tail portion of the second PolyimideFilm 51 is fixedly connected to the rectangular portion of the second copper foil 52. The circular portion of the substrate is provided with an atomizing aperture area 511, and the atomizing aperture area 511 is provided with micron atomizing apertures 510.

The fourth PolyimideFilm 53 is fixed on the rectangular portion of the second copper foil 52, that is, on the second electrode, and the fourth PolyimideFilm 53 and the second PolyimideFilm 51 are respectively located on the opposite surfaces of the second copper foil 52. The fourth PolyimideFilm 53 and the third PolyimideFilm 13 are pressed tightly to help connect the first composite plate 1 and the second composite plate 5 together, which can increase the stability of the ultrasonic atomization piece and improving the service life, and can also be used for insulation between the first electrode and the second electrode. In addition, the conductive planes of the first composite plate 1 and the second composite plate 5 are thus being parallel, which has excellent alternate current signal coupling ability, so that the space radiation of the product is effectively reduced.

The working principles of the ultrasonic atomization piece provided in the present disclosure are as follows:

A certain frequency of alternating current voltage is applied to the first copper foil 12 and the second copper foil 52, the frequency of the alternating current voltage is assumed to be 108KHz. In this case the voltage is electrically connected to an electric ceramic sheet through the first copper foil 12 and the second copper foil 52. The piezoelectric ceramic sheet 3 is controlled by an external electric field to produce a regular deformation consistent with the input frequency, and the deformation energy is transmitted to the first copper foil 12 and the second copper foil 52 through the lead-free solder paste. The second copper foil 52 and the second PolyimideFilm 51 are laminated together, so the deformation energy of the second copper foil 52 is concentrated on the second PolyimideFilm 51. The atomizing aperture area 511 of the second PolyimideFilm 51 generates a repeated motion consistent with the input frequency, and the direction of the repeated motion is perpendicular to the surface of the ultrasonic atomization piece. At this time, the lower surface of the second PolyimideFilm 51 is in contact with the liquid that needs to be atomized, the liquid is sprayed along the position of the atomizing apertures 510 in the case of being squeezed by the second PolyimideFilm 51, thus to form water mist.

Fig. 4 is a schematic structural view of atomizing apertures of the ultrasonic atomization piece provided by an embodiment according to the present disclosure.

As shown in Fig. 4, an inner diameter of the atomizing apertures 510 at a side close to the piezoelectric ceramic sheet 3 is smaller than an inner diameter of the atomizing apertures 510 at a side far from the piezoelectric ceramic sheet 3. Specifically, the inner diameter of the atomizing apertures 510 at the side close to the piezoelectric ceramic sheet 3 is 2µm to 8µm, and the inner diameter of the atomizing apertures 510 at the side far away from the piezoelectric ceramic sheet 3 is 20µm to 60µm.

The ultrasonic atomization piece provided in the present embodiment has the following advantages:
1. In the ultrasonic atomization piece provided in the present embodiment, the second PolyimideFilm 51 is one of the polymer plastic materials and thus has a good plasticity, and only a small amount of energy is required when the material is drilled apertures through the laser-drilling equipment. The material can be fully volatilized during the laser-drilling process, and the drilled surface is smooth, the resistance is small during the liquid passing through the apertures, and thus the mist efficiency is high.
2. The drilled articles of the second PolyimideFilm 51 can be fully volatilized during the drilling process, so there is no need to clean after the drilling process. The edge of the apertures are smooth, and the fatigue life of the material inherently is better than that of the metals, so the repeated deformations of the atomization piece during the working process will not generate obvious stress concentration points, and the risk of material fractures will not occur easily, and the overall working life of the atomization piece has been greatly improved.
3. The ultrasonic atomization piece provided in the present embodiment not only reduces the materials, but also greatly reduces the manufacturing process, so that the manufacturing cost of the product has been reduced, and the productivity per unit time has been improved.
4. The second PolyimideFilm 51 inherently has excellent chemical resistance and biocompatibility, so that the application of the atomization pieces has been greatly expanded, and the safety of the application in medical field is excellent.

With regard to the safety in medical field: the traditional stainless steel metal sheet reduces its own strength after the apertures are opened thereon, and there is a risk of rupturing under the action of fatigue. Once the stainless steel sheet is ruptured, the generated debris will follow the atomization liquids enter the human body, which will seriously damage the health of the human body. However, the second PolyimideFilm 51 according to the present embodiment is not easily ruptured; and even if it is ruptured, it will not cause damages to the human body after entering into the human body.

### Embodiment 2

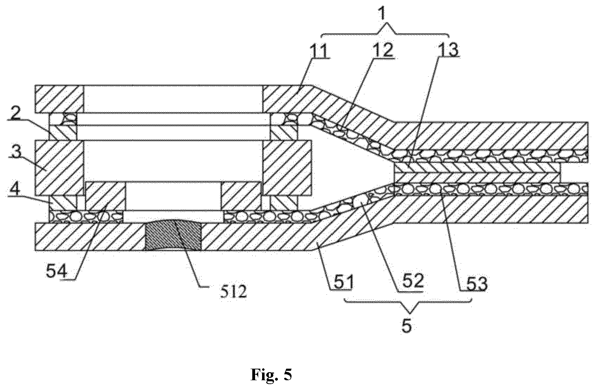

Fig. 5 is a schematic cross-sectional view of the ultrasonic atomization piece provided by Embodiment 2 according to the present disclosure.

As shown in Fig. 5, the ultrasonic atomization piece provided by Embodiment 2 according to the present disclosure is similar to that of Embodiment 1, both including a piezoelectric ceramic sheet 3, a first composite plate 1 and a second composite plate 5. Both the first composite plate 1 and the second composite plate 5 are made of FPC material.

Compared with Embodiment 1, one of the differences of the ultrasonic atomization piece provided in Embodiment 2 is that the second composite plate 5 further includes a fifth PolyimideFilm 54.

The fifth PolyimideFilm 54 has a annular shape and covers the annular portion of the second copper foil 52. The fifth PolyimideFilm 54 and the second PolyimideFilm 51 are respectively located on the opposite surfaces of the second copper foil 52.

An inner diameter of the annular portion of the second copper foil 52 is smaller than an inner diameter of the piezoelectric ceramic sheet 3, and an outer diameter of the fifth PolyimideFilm 54 is smaller than an inner diameter of the piezoelectric ceramic sheet 3 and larger than a diameter of an arc-shaped boss 512. With such design, the annular portion of the second copper foil 52 is larger. In order to prevent corrosion occurred on the enlarged portion of the second copper foil 52, the fifth PolyimideFilm 54 is used to shield the excess area, so that the deformation energy of the piezoelectric ceramic sheet 3 can be transmitted more through the second copper foil 52.

Compared with Embodiment 1, a second difference of the ultrasonic atomization piece provided in Embodiment 2 is that:

The copper foil 12 can be fixedly connected to the piezoelectric ceramic sheet 3 through a first press-thermosetting conductive adhesive film, and the second copper foil 52 can be fixedly connected to the piezoelectric ceramic sheet 3 through a second press-thermosetting conductive adhesive film, wherein the thermosetting conductive adhesive film is an SMT adhesive.

The lead-free solder paste layer is replaced with the SMT adhesive, and the SMT adhesive is coated on both surfaces of the piezoelectric ceramic sheet 3 by screen printing or adhesive dispensing, then the piezoelectric ceramic sheet 3 is preliminarily bonded with the first composite plate 1 and the second composite plate 5, and next placed in the reflow soldering equipment for further curing, and finally a product completely consistent with the present disclosure can be obtained. It can be understood that its working principals are the same as that of the previous description; only the bonding material is replaced from lead-free solder paste to the SMT adhesive, and the manufacturing process is completely unchanged; the advantages of the improved process are that the manufacturing cost of the product can further reduced, and the operating temperature of the SMT adhesive material is also lower than that of lead-free solder paste, which further reduces the influence of the piezoelectric ceramic sheet 3 during the soldering process. Meanwhile, the piezoelectric ceramic sheet 3 which is not covered with electrodes can be utilized, which can reduce the purchase cost of the piezoelectric ceramic sheet 3. In addition, since the SMT adhesive is an insulating adhesive, there is no need to worry about the electrode short circuits during the manufacturing process; even if the adhesive overflows, the product performance will not be affected, thus the fault-tolerance of the production process is improved.

More importantly, when the SMT adhesive is pressed, the second PolyimideFilm 51 will be tightened. When the PolyimideFilm is in a tight state, the flatness of the PolyimideFilm is the best, and the energy conversion efficiency of the atomization piece is further improved.

Compared with the Embodiment 1, a third difference of the ultrasonic atomization piece provided in Embodiment 2 is that the second PolyimideFilm 51 is provided with an arc-shaped boss 512.

The circular portion of the second PolyimideFilm 51 is provided with an atomizing aperture area 511, which is an arc-shaped boss 512 protruding towards the piezoelectric ceramic sheet 3. The atomizing aperture area 511 is provided with micron atomizing apertures 510.

The second PolyimideFilm 51 is one of the polymer plastic materials and thus has a good plasticity, which can be easily shaped by heating and other methods, so the arc-shaped boss 512 can be easily shaped.

A certain frequency of alternating current voltage is applied to the first copper foil 12 and the second copper foil 52, the frequency of the alternating current voltage is assumed to be 108KHz. In this case the voltage is electrically connected to an electric ceramic sheet 3 through the first copper foil 12 and the second copper foil 52. The piezoelectric ceramic sheet 3 is controlled by an external electric field to produce a regular deformation consistent with the input frequency, and the deformation energy is transmitted to the first copper foil 12 and the second copper foil 52 through the lead-free solder paste. The second copper foil 52 and the second PolyimideFilm 51 are laminated together, so the deformation energy of the second copper foil 52 is concentrated on the second PolyimideFilm 51. The arc-shaped boss 512 is provided in the center position of the second PolyimideFilm 51, and the atomizing apertures 510 are located within the area of the arc-shaped boss 512. In this case, the area of the arc-shaped boss 512 generates a repeated motion consistent with the input frequency, and the direction of the repeated motion is perpendicular to the surface of the ultrasonic atomization piece.

### Embodiment 3

Both Embodiment 1 and Embodiment 2 are provided with two composite plates. Actually, one composite plate may also be utilized, which is called a third composite plate. A substrate of the third composite plate is a sixth PolyimideFilm, a conductive layer of the third composite plate is a sixth copper foil, and the sixth copper foil is fixed on a bottom surface of a piezoelectric ceramic sheet. The sixth PolyimideFilm is provided with atomizing apertures, a part of the sixth copper foil is served as a first electrode of the piezoelectric ceramic sheet, and a second electrode is provided on a top surface of the piezoelectric ceramic sheet.

In Embodiment 1, Embodiment 2 and Embodiment 3, the substrate of the composite plate is the PolyimideFilm, and the conductive layer is the copper foil, that is, all are FPC materials. Actually, in other embodiments, the composite plate may also be: the substrate is the PolyimideFilm, the conductive layer is the stainless steel sheet; or other similar materials of the polymer film and metal conductive layer. The material of the metal conductive layer can be an alloy material such as a titanium alloy.

Table 1 is obtained by analyzing the structural differences between the ultrasonic atomization piece provided by the present disclosure and the traditional ultrasonic atomization piece from the aspects of parts and materials.

**Table 1 is a comparison table of materials used between the ultrasonic atomization piece of the present disclosure and the traditional atomization piece.**

| | Name of Material | Material Classification | Environmental Protection Materials |
|---|---|---|---|
| Present Disclosure | FPC board | main material | yes |
| | piezoelectric ceramic sheet | | |
| | lead-free solder paste | auxiliary material | |
| Traditional | stainless steel metal sheet | main material | yes |
| | piezoelectric ceramic sheet | | |
| | conductive wire | | |
| | adhesive with conductive properties | auxiliary material | |
| | lead-free tin wire | | |
| | acid corrosive agent | | no |

According to Table 1, it can be seen that the materials of the ultrasonic atomization piece of the present disclosure and the traditional ultrasonic atomization piece have good matured manufacturing processes of both the main materials and auxiliary materials. However, the materials used in the present disclosure are complied with the environmental protection requirements, while the chemical agent that is not in accordance with the environmental protection processes has been used in the traditional ultrasonic atomization piece. In addition, the traditional ultrasonic atomization piece has doubled-type of materials, and the complexity of the types of materials makes the manufacturing process of the traditional ultrasonic atomization piece more complicated.

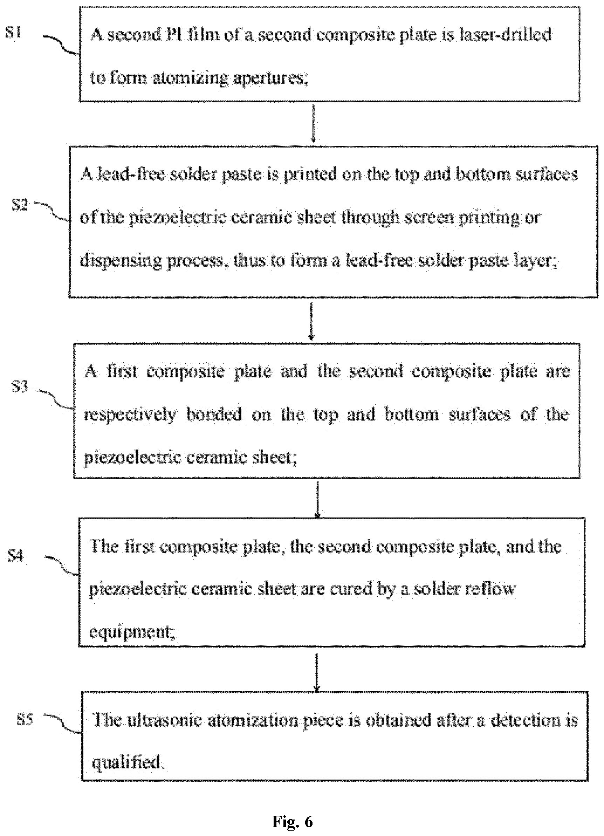

Fig. 6 is a simple process flow chart of the ultrasonic atomization piece provided by an embodiment according to the present disclosure.

As shown in Fig. 6, a manufacturing process of the ultrasonic atomization piece according to the present disclosure comprises:
S1. a second PolyimideFilm of a second composite plate is laser-drilled to form atomizing apertures;
S2. a lead-free solder paste is printed on the top and bottom surfaces of the piezoelectric ceramic sheet through screen printing or dispensing process, thus to form a lead-free solder paste layer;
S3. a first composite plate and the second composite plate are respectively bonded on the top and bottom surfaces of the piezoelectric ceramic sheet;
S4. the first composite plate, the second composite plate, and the piezoelectric ceramic sheet are cured by a solder reflow equipment;
S5. the ultrasonic atomization piece is obtained after a detection is qualified.

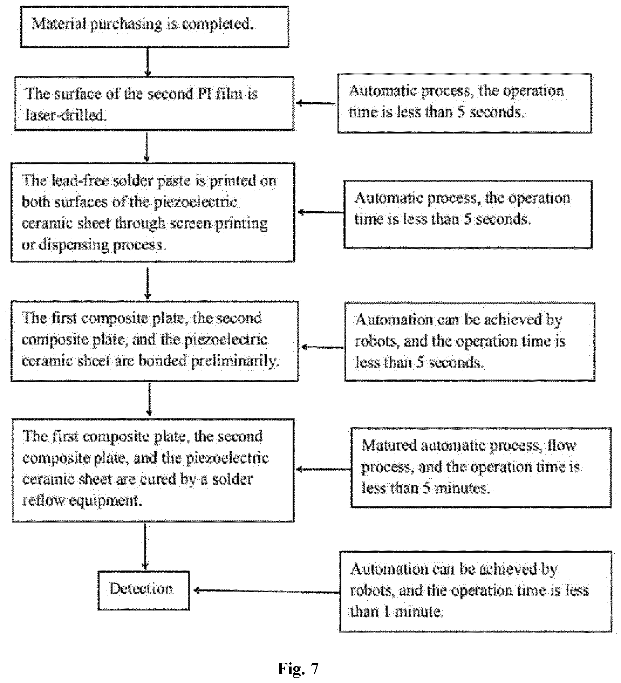

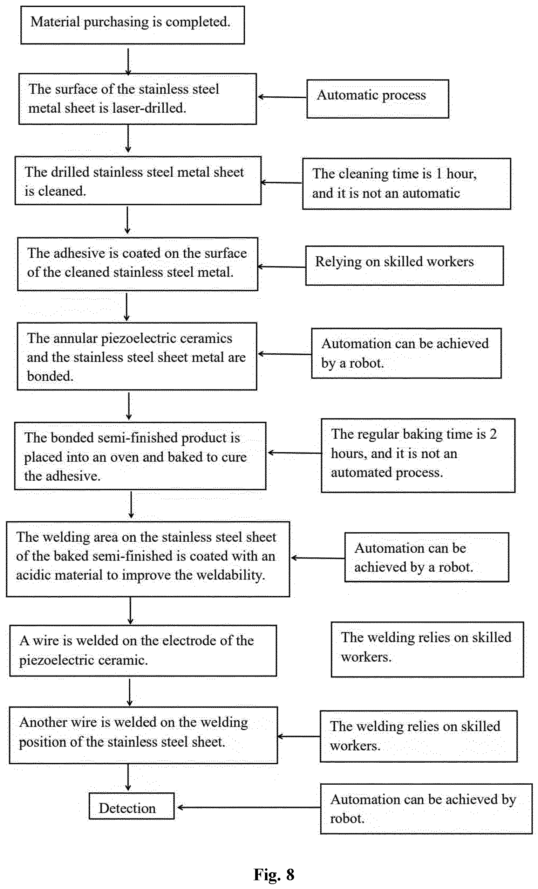

Fig. 7 is a more specific process flow chart of the ultrasonic atomization piece provided by an embodiment according to the present disclosure. Fig. 8 is a process flow chart of a traditional ultrasonic atomization piece.

By comparing Fig. 7 and Fig. 8, it can be seen that the ultrasonic atomization piece provided by the present disclosure not only reduces the materials, but also greatly reduces the manufacturing processes, so that the manufacturing cost of the product is reduced, and the productivity per unit time is increased simultaneously. The specific differences are as follows:

In the cleaning and baking process in the preparation process of the traditional ultrasonic atomization piece, since the cleaning and the baking equipments are non-assembly line equipments, it is necessary to accumulate a certain amount of production line for transferring to the equipments manually and operating continuously in the equipments. The process causes a short board effect in the manufacturing process and leads to a large amount of transit storage in the production line and large demands for labors.

The wire welding in the preparation process of the traditional ultrasonic atomization piece heavily relies on skilled welding workers. Due to the poor weldability of the stainless steel metal material, the welding efficiency is low, and the high temperature generated during the welding process can easily damage the piezoelectric ceramic.

The preparation process of the traditional ultrasonic atomization piece requires a large amount of transit storage, and the process is too complicated, so the demands the sites are large, while production capacity is increased, the space utilization rate has dropped severely.

The traditional ultrasonic atomization piece require more types of manufacturing equipments, resulting in high construction costs of the manufacturing lines, and equipment depreciation causes high costs.

Contrarily, the preparation process of the ultrasonic atomization piece according to the present disclosure, robots are used in the prepared process of the ultrasonic atomization piece of the present disclosure in part of the processes to realize the automation of the production line, which can realize the completely streamlined production of the production line, all the processes can realize the same rhythm operation, and the production efficiency of per unit time has been greatly improved. The space requirement is extremely low, the production capacity can be managed flexibly, and the space utilization rate is increased in the case that the production capacity is further increased, and the site cost is reduced. Most importantly, the mesh-type ultrasonic atomization piece of the present disclosure produces extremely low pollutants during the production process, which is a very environmentally protection preparation process. The prepared process of the mesh-type ultrasonic atomization piece of the present disclosure has a few demands for equipment types, and only needs the laser-drilling equipment and the reflow soldering equipment, and the construction cost of the production line has been reduced significantly.

By comparing the respective characteristics of the ultrasonic atomization piece of the present disclosure and the traditional ultrasonic atomization piece, a comparison table of the atomization piece of the present disclosure and the traditional atomization piece can be obtained, as shown in Table 2:

**Table 2 is the comparison table of the atomization piece of the present disclosure and the traditional atomization piece.**

| Items | Traditional Atomization Piece | New Atomization Piece | Remarks |
|---|---|---|---|
| Material Requirements | large | small | |
| Manufacturing Processes | complicated | simple | From raw materials to products, the entire process of the new products can be completed in less than 10 minutes. |
| Investments on Manufacturing Equipments | High, many kinds of equipments are required and high power laser-drilling equipments are needed to drill apertures on the stainless steel sheet. | Low, only the laser-drilling equipment and the reflow soldering equipment are need, and the power requirement of laser-drilling equipment is not high. | The production of the new products can be fully automated, and one reflow soldering equipment can serve as multiple bonding manufacturing lines for simultaneously inputting in soldering, which has improved the utilization rate of soldering equipment. |
| Scalability for Automatic Production | It is hard to achieve automatic production. | It is very easy to achieve automatic production and streamlined production at the same rhythm. | |
| Consistency of the Production | Poor, due to the errors caused by laser-drilling and too many manual manufacturing processes, it is hard to improve the product consistency. | All process parameters can be digitally managed, and the consistency of product manufacturing is excellent. | |
| Environmental Impacts of Product Manufacturing | High, more toxic and heavy metal-containing wastes are produced during the manufacturing processes. | Low, almost no pollution is produced during the manufacturing processes. | |
| Consistency of Product Performance | Due to too many manual manufacturing processes, the consistency of the product performance is not good. | The consistency of the product performance is minimally affected by the manufacturing processes. | |
| Influences of Welding on the Performance of Piezoelectric Ceramic Sheet | The performance of the piezoelectric ceramic sheet will be easily affected by the local high temperature caused by welding in the manual welding process, and even some units are failed. | The whole reflow soldering process is controlled by the digital temperature, and the maximum temperature does not exceed 180°C, which is much lower than the failure temperature of piezoelectric ceramic sheet of 250°C, and there is a staged preheating, and the whole process is uniformly heated, which has minimal impacts on the performance of piezoelectric ceramic sheet. | |
| Biocompatibili ty | good | good | |
| Product Life | general | good | |
| Risk of Product Failure | When the metal surface is ruptured and failed, it will cause serious damages to people, and if it enters human bodies, it will be unable to self-discharge, which needs to be treated by the auxiliary means such as surgery. | The fatigue failure of PolyimideFilm will not seriously affect the human bodies, and as a medical-grade material, the PolyimideFilm will not cause damages even if it enters the human bodies. | |
| Energy Consumption During the Manufacturing Process | High, due to a long time of ultrasonic cleaning and baking, the energy consumption of a single product is very high. | Low, in the case of automatic manufacturing in the same proportion, only the reflow soldering equipment has large energy consumption, however, since the reflow soldering time of a single product is very short and less than 5 minutes, so the unit energy consumption is not high. In addition, one reflow soldering equipment can meet the soldering needs of multiple bonding lines at the same time, and the density of the products welded at the same time is improved, thus the utilization rate of the equipment has been greatly improved, and the manufacturing energy consumption of the single product is further reduced. | |
| Work Efficiency | general | good | |
| Material Costs | low | low | |
| Manufacturing Cost | high | low | |
| Overall Costs | general | low | |

According to Table 2, it can be seen that the present disclosure brings further innovations in the production processes by innovating the materials and structural applications of the ultrasonic atomization piece, thus a new product having better performance than that of the traditional product and a more environmental protection production process is obtained.

It should be noted that, the working principles of the piezoelectric ceramic sheet are as follows: voltages are applied to the electrodes on both surfaces of the piezoelectric ceramic sheet, so that the piezoelectric ceramic sheet is deformed, since the ceramic of the piezoelectric ceramic sheet is a non-conductor, the reason for generating deformation is a space charge field generated by the voltage on the electrodes. Therefore, the characteristics of the piezoelectric ceramic sheet should be understood that, when the first composite plate and the second composite plate are attached on both surfaces of the piezoelectric ceramic sheet, even if there is no connection with the electrodes, the voltages are applied to the metal layers of the first composite plate and the second composite plate, the space charge field can also be formed on both surfaces of the piezoelectric ceramic sheet, thus to generate deformations. Based on the above principles, a piezoelectric ceramic sheet that is not covered with electrodes can be utilized, that is, the coating layer without metal electrodes on both surfaces of the piezoelectric ceramic sheet is placed between the first composite plate and the second composite plate, and an insulating adhesive is used to bond simultaneously. The adhesive plays the role of transmitting the deformation force, and plays the role of fixing the first composite plate and the second composite plate on both surfaces of the piezoelectric ceramic sheet. In this case, the voltage is applied to the conductive metal layer to make the piezoelectric ceramic sheet generate deformation, and the energy of the deformation will be transferred to the second composite plate by the adhesive, thus to use the energy. In the present disclosure, the copper foil layer of the first composite plate and the second composite plate can be understood as the electrodes of the piezoelectric ceramic sheet.

Based on the above principles and in order to simplify the process, the optimizations can be made as follows. The lead-free solder paste layer is replaced with the "SMT" adhesive, and the SMT adhesive is coated on both surfaces of the piezoelectric ceramic sheet by using equipment such as screen printing or adhesive dispensing, then the piezoelectric ceramic sheet is preliminarily bonded with the first composite plate and the second composite plate and next placed in the reflow soldering equipment for further curing, and finally a product completely consistent with the present disclosure can be obtained. It can be understood that its working principle is the same as the previous description; only the bonding material is replaced from lead-free solder paste to the SMT adhesive, and the manufacturing process is completely unchanged; the advantages of the improved process are that the manufacturing cost of the product can further reduced, and the operating temperature of the SMT adhesive material is also lower than that of the lead-free solder paste, which further reduces the influence of the piezoelectric ceramic sheet during the soldering process. Meanwhile, the piezoelectric ceramic sheet that is not covered with electrodes can be utilized, which can reduce the purchase cost of the piezoelectric ceramic sheet. In addition, since the SMT adhesive is an insulating adhesive, there is no need to worry about the electrode short circuits during the manufacturing process; even if the adhesive overflows, the product performance will not be affected, thus the fault-tolerance of the production process is improved.

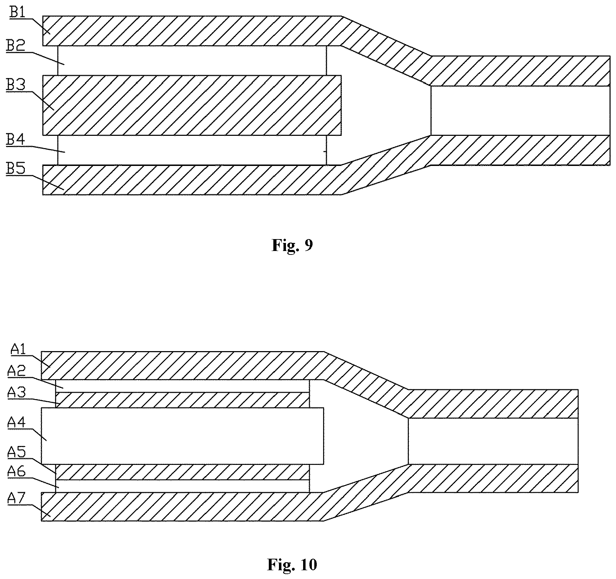

Fig. 9 is a schematic structural view of the ultrasonic atomization piece prepared by a lead-free solder paste.

Fig. 10 is a schematic structural view of the ultrasonic atomization piece prepared by SMT adhesive.

As shown in Fig. 9 and Fig. 10, other layers of the product are not shown in Fig. 9 and Fig. 10, such as a PolyimideFilm layer, etc. In order to facilitate understanding, electrode layers A3 and A5 of the piezoelectric ceramic sheet are added to the improved position, and the installation sequence is numbered. For details of each layer, please refer to Table 3.

**Table 3 is a comparison table of the lead-free solder paste prepared atomization piece and SMT adhesive prepared atomization piece.**

| Number | Description | Number | Description |
|---|---|---|---|
| A1 | first copper foil | B1 | second copper foil |
| A2 | lead-free solder paste | B2 | SMT adhesive |
| A3 | electrode layer of piezoelectric ceramic sheet | | |
| A4 | piezoelectric ceramic sheet | B3 | piezoelectric ceramic sheet |
| A5 | electrode layer of piezoelectric ceramic sheet | B4 | SMT adhesive |
| A6 | lead-free solder paste | | |
| A7 | second copper foil | B5 | second copper foil |

It can be seen from Table 3, the requirements for the piezoelectric ceramic sheet is reduced by using the SMT adhesive, and the piezoelectric ceramic sheet having a conductive layer is no longer required. At the same time, the SMT adhesive and the ceramic of the piezoelectric ceramic sheet are both insulating materials, which can prevent electrode short-circuit faults caused by overflowing adhesive during the welding process, and at the same time, the working performance of the piezoelectric ceramic sheet will not be affected.

In summary, the ultrasonic atomization piece and its manufacturing process provided by the present disclosure have the following advantages:
1. With regard to the materials, the materials of the ultrasonic atomization piece of the present disclosure and the traditional ultrasonic atomization piece have good matured manufacturing processes on both the main materials and auxiliary materials. However, the materials used in the present disclosure are all complied with the environmental protection requirements, while the chemical agent that is not in accordance with the environmental protection processes has been used in the traditional ultrasonic atomization piece. In addition, the traditional ultrasonic atomization piece has doubled-type of materials.
2. The second PolyimideFilm is one of the polymer plastic materials and thus has a good plasticity, which can be easily shaped by heating and other methods, so the arc surface at the center of the circle can be easily shaped, and only a small amount of energy is required when the material is drilled apertures through the laser-drilling equipment. The material can be fully volatilized during the laser-drilling processes, and the drilled surface is smooth, the resistance is small during the liquid passing through the aperture, and the mist efficiency is high.
3. The second PolyimideFilm can be fully volatilized during the drilling process, so there is no need to clean after the drilling process. The edge of the apertures are smooth, and the fatigue life of the material inherently is better than that of the metals, so the repeated deformations of the atomization piece during the working process will not generate obvious stress concentration points, and the risk of material fractures will not occur easily, and the overall working life of the atomization piece has been greatly improved.
4. The second PolyimideFilm 51 inherently has excellent chemical resistance and biocompatibility, so that the application of the atomization pieces has been greatly expanded, and the safety of the application in the medical field is excellent.
5. The ultrasonic atomization piece provided in the present embodiment not only reduces the materials, but also greatly reduces the manufacturing process, so that the manufacturing cost of the product has been reduced, and the productivity per unit time has been improved.
6. Robots are used in the prepared process of the ultrasonic atomization piece of the present disclosure in part of the processes to realize the automation of the production line, which can realize the completely streamlined production of the production line, and all the processes can realize the same rhythm operation, and the production efficiency of per unit time has been greatly improved. The space requirement is extremely low, the production capacity can be managed flexibly, and the space utilization rate is increased in the case that the production capacity is further increased, and the site cost is reduced. Most importantly, the mesh-type ultrasonic atomization piece of the present disclosure produces extremely low pollutants during the production process, which is a very environmentally protection preparation process. The prepared process of the mesh-type ultrasonic atomization piece of the present disclosure has a few demands for equipment types, and only needs the laser-drilling equipment and the reflow soldering equipment, and the construction cost of the production line has been reduced significantly.

Although the present disclosure has been described in the above, the present disclosure is not limited to those. Anyone skilled in the art can make various changes and modifications without departing from the spirit and scope of the present disclosure. Therefore, the protective scope of the present disclosure is subject to the protective scope in claims.

## Claims

1. An ultrasonic atomization piece, comprising a piezoelectric ceramic sheet and at least one composite plate, wherein the composite plate is fixed on one side of the piezoelectric ceramic sheet and includes a substrate and a conductive layer, the conductive layer is in contact with the piezoelectric ceramic sheet, the substrate is provided with atomizing apertures , and the substrate is a polymer film.

2. The ultrasonic atomization piece according to claim 1, wherein the substrate is a PolyimideFilm, and the conductive layer is a copper foil.

3. The ultrasonic atomization piece according to claim 1, wherein the substrate is a PolyimideFilm, and the conductive layer is a stainless steel sheet.

4. The ultrasonic atomization piece according to claim 2, comprising two composite plates that are respectively a first composite plate and a second composite plate, wherein the substrate of the first composite plate is a first PolyimideFilm, the conductive layer of the first composite plate is a first copper foil, and the first copper foil is fixed on one side of the piezoelectric ceramic sheet; the substrate of the second composite plate is a second PolyimideFilm, the conductive layer of the second composite plate is second copper foil, and the second copper foil is fixed on the other side of the piezoelectric ceramic sheet; the second PolyimideFilm is provided with atomizing apertures, a part of the first copper foil is served as a first electrode of the piezoelectric ceramic sheet, and a part of the second copper foil is served as a second electrode of the piezoelectric ceramic sheet.

5. The ultrasonic atomization piece according to claim 4, wherein the first composite plate further includes a third PolyimideFilm which is fixed on the first electrode, the second composite plate further includes a fourth PolyimideFilm which is fixed on the second electrode, and the third PolyimideFilm is fixedly connected to the fourth PolyimideFilm.

6. The ultrasonic atomization piece according to claim 4 or 5, wherein the second composite plate further includes a fifth PolyimideFilm, the fifth PolyimideFilm covers the second copper foil and is faced with a central cavity of the piezoelectric ceramic sheet.

7. The ultrasonic atomization piece according to claim 1, wherein there is only one composite plate, that is, a third composite plate, the substrate of the third composite plate is a sixth PolyimideFilm, and the conductive layer of the third composite plate is a third copper foil; the third copper foil is fixed on the bottom surface of the piezoelectric ceramic sheet, and the sixth PolyimideFilm is provided with atomizing apertures; a part of the third copper foil is served as a first electrode of the piezoelectric ceramic sheet, and a fourth copper foil serving as a second electrode is provided on the top surface of the piezoelectric ceramic sheet.

8. The ultrasonic atomization piece according to claim 1, wherein the substrate comprises a circular portion capable of covering a central cavity of the piezoelectric ceramic sheet and a tail portion connected to the circular portion; the conductive layer includes an annular portion and a tail portion connected to the annular portion; the circular portion of the substrate is connected with the annular portion of the conductive layer, and the tail portion of the substrate is connected with the tail portion of the conductive layer.

9. The ultrasonic atomization piece according to claim 8, wherein an atomizing aperture area is provided on a circular portion of the substrate, and the atomizing aperture area is provided with micron atomizing apertures .

10. The ultrasonic atomization piece according to claim 9, wherein the atomizing aperture area is an arc-shaped boss protruding towards the piezoelectric ceramic sheet.

11. The ultrasonic atomization piece according to claim 1, wherein the conductive layer is fixedly connected to the piezoelectric ceramic sheet through a lead-free solder paste layer.

12. The ultrasonic atomization piece according to claim 1, wherein the conductive layer is fixedly connected to the piezoelectric ceramic sheet through a press-thermosetting conductive adhesive film.

13. The ultrasonic atomization piece according to claim 1, wherein an inner diameter of the atomizing apertures at a side close to the piezoelectric ceramic sheet is smaller than an inner diameter of the atomizing apertures at a side far away from the piezoelectric ceramic sheet.

14. The ultrasonic atomization piece according to claim 13, wherein the inner diameter of the atomizing apertures at the side close to the piezoelectric ceramic sheet is 2µm to 8 µm, and the inner diameter of the atomizing apertures at the side far away from the piezoelectric ceramic sheet is 20µm to 60µm.

15. A manufacturing process of the ultrasonic atomization piece according to claim 2, comprising:
S1. a second PolyimideFilm of a second composite plate is laser-drilled to form atomizing apertures;
S2. a lead-free solder paste is printed on the top and bottom surfaces of the piezoelectric ceramic sheet through screen printing or dispensing process, thus to form a lead-free solder paste layer;
S3. a first composite plate and the second composite plate are respectively bonded on the top and bottom surfaces of the piezoelectric ceramic sheet;
S4. the first composite plate, the second composite plate, and the piezoelectric ceramic sheet are cured by a solder reflow equipment.
